# EUROPEAN PATENT APPLICATION

(11) **EP 0 888 006 A1**
(43) Date of publication of application: **30.12.1998**
(21) Application number: 97905483.0
(22) Date of filing: 11.03.1997
(51) Int. Cl.: H04N 5/91, H04N 5/92

(54) **COMPRESSED DIGITAL VIDEO, AND METHOD AND DEVICE FOR AUDIO FRAME GAP ADJUSTING AND EDITING**

(30) Priority: 12.03.1996 JP 54576/96
(71) Applicant: DAIKIN INDUSTRIES, LTD., Kita-ku, Osaka 530 (JP)
(72) Inventor: OTSUKA, Masato, Kusatsu-shi, Shiga 525 (JP); INADA, Ryozo, Kusatsu-shi, Shiga 525 (JP)
(74) Representative: Prüfer, Lutz H., Dipl.-Phys.
(86) International application number: JP9700764
(87) International publication number: WO9734416

(57) **Abstract**

The method and apparatus calculate an editing connecting point time for minimizing shifting between reproduction time data at a first reproduction branching and connecting point in response to designating of the first reproduction branching and connecting point, and determine a second reproduction branching and connecting point based upon the calculated editing connecting point time so that pause times of video data reproduction and/or audio data reproduction are minimized when the first reproduction branching and connecting point is designated by a user.

## Description

### Technical Field

The present invention relates to a method for adjusting and editing digital compressed video and Audio frame gaps and an apparatus thereof. More particularly, the present invention relates to a method and an apparatus for editing digital compressed data so that at least two digital compressed data are reproduced in a manner that one digital compressed data is reproduced halfway and another digital compressed data is reproduced thereafter. Each digital compressed data includes digital compressed video frames and digital compressed audio frames. Further, reproduction time data for performing reproduction synchronism are given for each digital compressed data.

### Related Art

In the past, branching and connecting one digital compressed data and another digital compressed data was performed by determining a reproduction branching and connecting point which is designated by a user as a standard point when at least two digital compressed data are edited so that one digital compressed data is reproduced halfway and another digital compressed data is reproduced thereafter. Each digital compressed data includes digital compressed video frames and digital compressed audio frames. Further, reproduction time data for performing reproduction synchronism are given for each digital compressed data.

Therefore, the one digital compressed data is reproduced in an expanding manner until the reproduction branching and connecting point, and another digital compressed data is reproduced in an expanding manner after the reproduction branching and connecting point. As a result, the one digital compressed data and the another digital compressed data are sequentially reproduced by determining the reproduction branching and connecting point intended by the user as a boundary point.

When digital compressed data are digital compressed data, such as MPEG (Moving Picture Image Coding Experts Group) data, in which reproduction synchronism is performed based upon reproduction time (reproduction time stamp, and is referred to as PTS hereinafter) data, a frame unit of video data and a frame unit of audio data are different from one another. Therefore, discontinuity is generated in PTS data at a connecting point of audio data so that pauses are generated in reproduction of audio data when the reproduction is performed based upon PTS data of video data, for example. On the contrary, discontinuity is generated in PTS data at a connecting point of video data so that pauses are generated in reproduction of video data when the reproduction is performed based upon PTS data of audio data.

As a result, pauses are generated in reproduction of any one of data in adjacent regions with respect to the reproduction branching and connecting points so that quality in picture and/or quality in sound after editing are extremely lowered.

The present invention was made in view of the above problems.

It is an object of the present invention to offer a method for adjusting and editing digital compressed video and audio frame gaps and an apparatus thereof which method and apparatus can minimize pause times of video reproduction and/or audio reproduction when a user designates a reproduction branching and connecting point.

### Summary Of The Invention

A method for adjusting and editing digital compressed video and audio frame gaps of a first embodiment according to the present invention comprises the steps of,
a calculating step for calculating an editing and connecting point time which is for minimizing shifting between reproduction time data at a first reproduction branching and connecting point in response to designation of the first reproduction branching and connecting point, and
a determining step for determining a second reproduction branching and connecting point based upon the calculated editing and connecting point time.

A method for adjusting and editing digital compressed video and audio frame gaps of a second embodiment according to the present invention further comprises the step of,
a displaying step for displaying frame data at the designated reproduction branching and connecting point and frame data at the determined reproduction branching and connecting point so that an edited point can be recognized.

An apparatus for adjusting and editing digital compressed video and audio frame gaps of a third embodiment according to the present invention comprises,
an editing and connecting time calculating means for calculating an editing and connecting time which is for minimizing shifting between reproduction time data at a first reproduction baranching and connecting point in response to designation of the first reproduction branching and connecting point, and
a synchronous editing means for determining a second reproduction branching and connecting point based upon the calculated editing and connecting point time, and for synchronously editing digital compressed video frames and digital compressed audio frames based upon the determined reproduction branching and connecting point.

When the method for adjusting and editing digital compressed video and audio frame gaps of a first embodiment according to the present invention is employed, an editing and connecting point time is calculated in response to designation of a first reproduction branching and connecting point, the editing and connecting point time being calculated for minimizing shifting between reproduction time data at the first reproduction branching and connecting point, and a second reproduction branching and connecting point is determined based upon the calculated editing and connecting point time, for editing the digital compressed data so as to reproduce the one digital compressed data halfway and to reproduce the another digital compressed data thereafter. Each digital compressed data includes digital compressed video frames and digital compressed audio frames. Further, reproduction time data for performing reproduction synchronism are given for each digital compressed data. Even when pauses which cannot be ignored are generated during video reproduction and/or audio reproduction, video and/or audio data being edited by employing the designated first reproduction branching and connecting point as it is, pause time for video reproduction and/or audio reproduction can be minimized so that lowering in picture quality and/or audio quality due to editing (lowering in quality due to pause) can be suppressed greatly, because the second reproduction branching and connecting point is determined for minimizing shifting between reproduction time data.

When the method for adjusting and editing digital compressed video and audio frame gaps of a second embodiment according to the present invention is employed, frame data at the designated first reproduction branching and connecting point and frame data at the determined second reproduction branching and connecting point are displayed for recognizing the editing point. A reproducing condition can be recognized in an earlier stage without reproducing edited digital compressed data in its entirety so that a required time period for editing including recognizing processing can be shortened greatly. Further, an editing cost can be decreased greatly and function similar to that of the first embodiment can be performed.

When the apparatus for adjusting and editing digital compressed video and audio frame gaps of a third embodiment according to the present invention is employed, the editing connecting point time for minimizing shifting between reproduction data at the first reproduction branching and connecting point by the editing connecting point time calculation means in response to designating of the first reproduction branching and connecting point, the second reproduction branching and connecting point is determined by the synchronism editing means based upon the calculated editing connecting point time and the digital compressed video frames and digital compressed audio frames are edited in synchronism by the synchronism editing means based upon the determined second reproduction branching and connecting point for editing the digital compressed data so as to reproduce the one digital compressed data halfway and to reproduce the another digital compressed data thereafter. Each digital compressed data includes digital compressed video frames and digital compressed audio frames. Further, the reproduction time data for performing reproduction synchronism are given to each digital compressed data. Even when pauses which cannot be ignored are generated during video reproduction and/or audio reproduction, video and/or audio data being edited by employing the designated first reproduction branching and connecting point as it is, pause time for video reproduction and/or audio reproduction can be minimized so that lowering in picture quality and/or audio quality due to editing (lowering in quality due to a pause) can be suppressed greatly, because the second reproduction branching and connecting point is determined for minimizing shifting between reproduction time data.

### Brief Description Of The Drawings

Figure 1 is a flowchart explaining a method for adjusting and editing digital compressed video and audio frame gaps of an embodiment according to the present invention;
Figure 2 is a schematic diagram representing digital compressed data prior to branching;
Figure 3 is a schematic diagram representing digital compressed data after branching;
Figure 4 is a schematic diagram representing a condition in which digital compressed data are edited for branching;
Figure 5 is a diagram schematically representing a video image icon display prior and after frame gap adjusting; and
Figure 6 is a block diagram illustrating an apparatus for adjusting and editing digital compressed video and audio frame gaps of another embodiment according to the present invention.

### Best Modes For Performing The Invention

Hereinafter, referring to the attached drawings, we explain embodiments of the present invention in detail.

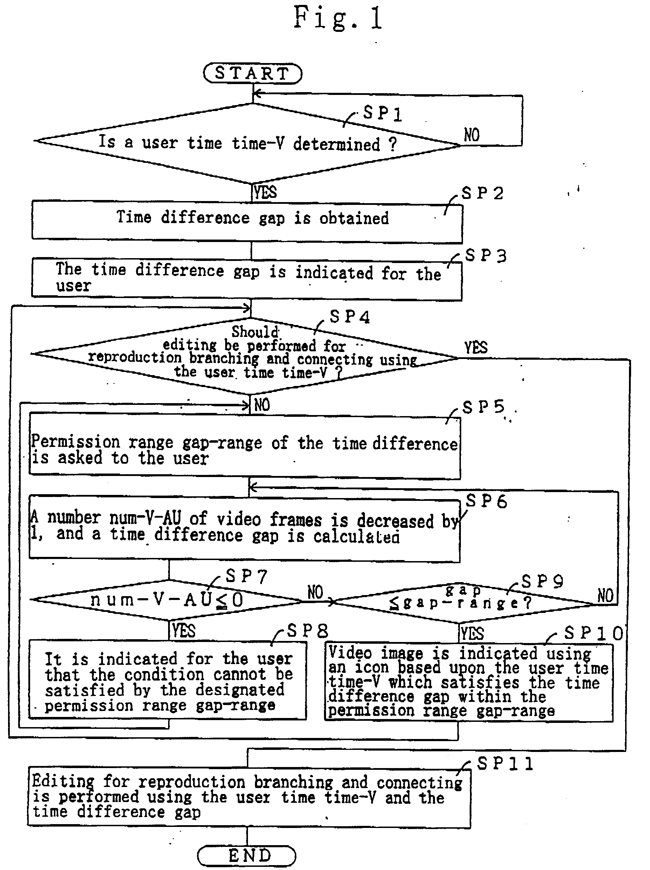

Fig. 1 is a flowchart explaining a method for adjusting and editing digital compressed video and audio frame gaps of an embodiment according to the present invention.

In step SP1, it is waited until a user time (a reproduction branching and connecting point time determined by a user) time-V is determined. In step SP2, a finishing time time-A of the audio frame is obtained which time is the nearest to and is smaller than the user time time-V, and a time (hereinafter, referred to as a time difference) gap is obtained by subtracting a difference ext-A-time between a starting time of a video frame after branching and a starting time of an audio frame after branching from a difference between the user time time-V and the finishing time time-A. In step SP3, the time difference gap is indicated for the user. In step SP4, it is asked whether or not editing should be performed for reproduction branching and connecting using the user time time-V. That is, a response by the user against the asking is judged.

When it is judged that editing should not be performed for reproduction branching and connecting using the user time time-V, the user is asked in step SP5, a permission range gap-range of the time difference. That is, a response by the user is taken as the permission range gap-range.

Then, in step SP6, the number num-V-AU of video frames is decreased by 1, and a time difference gap is calculated (of course, the user time time-V is also changed following decreasing of the number num-V-AU of the video frames). In step SP7, it is judged whether or not the number num-V-AU of the video frames is equal to or less than 0. When it is judged that the number num-V-AU is equal to or less than 0, in step SP8, it is indicated for the user that the condition cannot be satisfied by the designated permission range gap-range. The operation in step SP5 is performed thereafter.

When it is judged in step SP7 that the number num-V-AU of the video frames is greater than 0, in step SP9, it is judged whether or not the time difference gap calculated in step SP6 is equal to or less than the permission range gap-range. When it is judged that the time difference gap is equal to or less than the permission range gap-range, in step SP10, video image is indicated using an icon based upon the user time time-V which satisfies the time difference gap within the permission range gap-range. The judgment in step SP4 is performed thereafter.

When it is judged in step SP4 that editing is to be performed for reproduction branching and connecting using the user time time-V, in step SP11, editing for reproduction branching and connecting is performed using the user time time-V and the time difference gap. Then, a series of operations is finished.

Therefore, the user time time-V can be determined so that the time difference gap is equal to or smaller (minimized) within the permission range gap-range, in response to indication of the time difference gap calculated based upon the designated user-time time-V to the user and determining a desired permission range gap-range by the user. As a result, the pause time for audio reproduction at the reproduction branching and connecting point is determined to be within the permission range gap-range when the edited digital compressed data is reproduced.

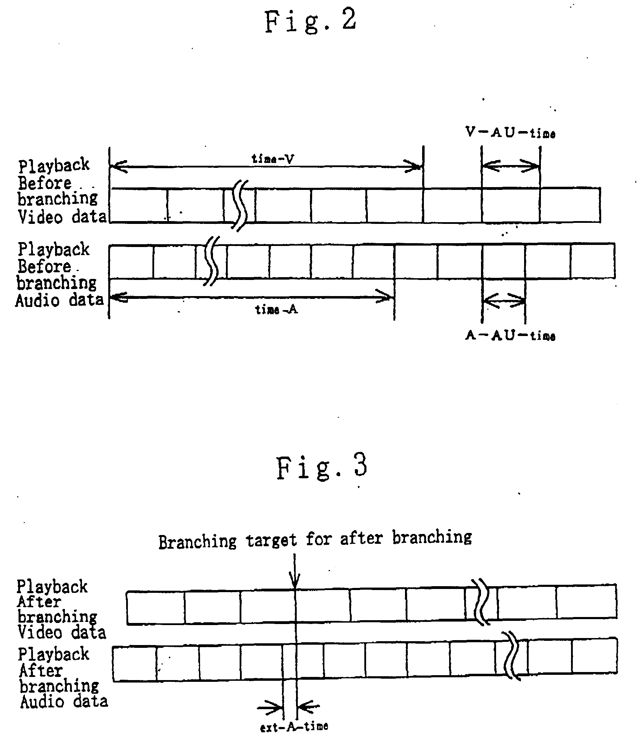

The above operation is described in more detail by taking as an example for reproduction branching and connecting the digital compressed data illustrated in Fig. 2 and the digital compressed data illustrated in Fig. 3. The digital compressed data illustrated in Fig. 2 corresponds to data prior to branching, while the digital compressed data illustrated in Fig. 3 corresponds to data after branching.

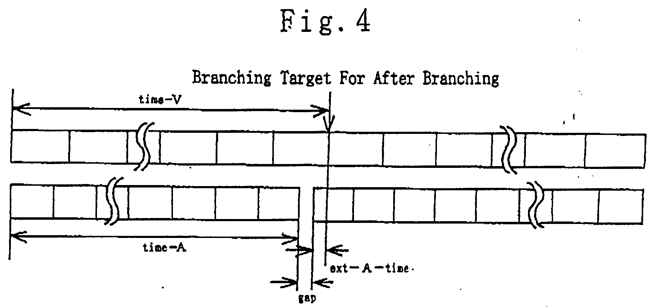

When the user time time-V corresponding to the video data is designated as is illustrated in Fig. 2, the finishing time time-A of the audio frame becomes a time illustrated in Fig. 2. And, the digital compressed data after branching is illustrated in Fig. 3. The difference between the reproduction starting time of the reproduction starting video frame and the reproduction starting time of the reproduction starting audio frame is determined to be ext-A-time. Therefore, the value obtained by subtracting the value of time-A and the value of ext-A-time from the value of time-V becomes the time difference gap, as is illustrated in Fig. 4, when the video data are determined to branch at the user time time-V.

Further, a time V-AU-time of a video frame and a time A-AU-time of an audio frame are different from one another. Therefore, the time difference gap can be decreased by decreasing the user time time-V by every time of V-AU-time due to decreasing of the number of the video frames. That is, the time difference gap can be minimized by selecting a number for decreasing the number of the video frames.

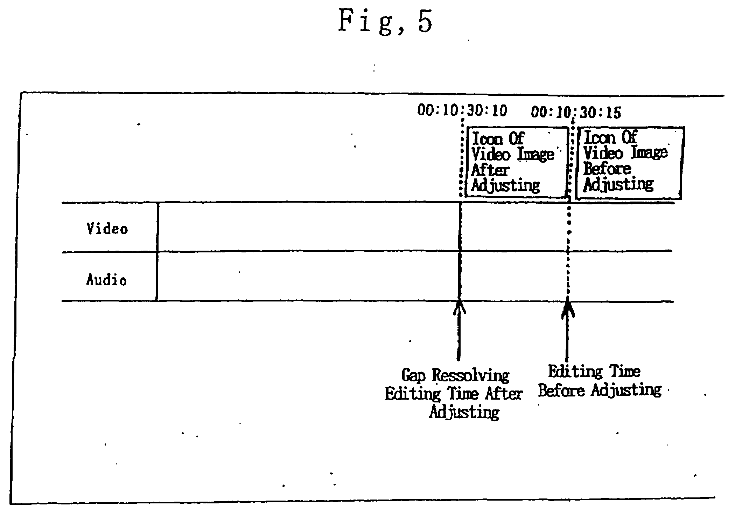

In the series of processings, recognizing of the reproduction branching and connecting point can be performed easily by visually displaying the frame image of the video data at the initially designated user time time-V and the frame image of the video data at the finally determined user time time-V, as is illustrated in Fig. 5. Further, the reproducing condition can be confirmed at an earlier stage without reproducing the edited digital compressed data in its entirety. Therefore, the required time for editing including confirmation processing can be shortened greatly, and the editing cost can be decreased greatly.

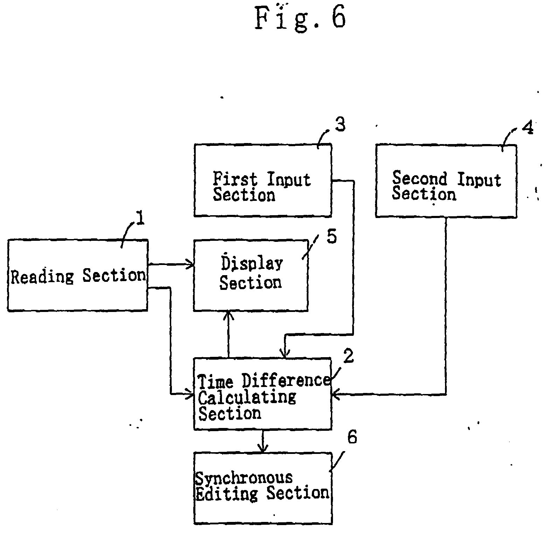

Fig. 6 is a block diagram illustrating an apparatus for adjusting and editing digital compressed video and audio frame gaps of another embodiment according to the present invention.

The apparatus includes a reading section 1, a time difference calculating section 2, a first input section 3, a second input section 4, a display section 5 and a synchronous editing section 6.

The reading section 1 takes in digital compressed data comprising digital compressed video data and audio data. The first input section 3 is used to determine a user time (a reproduction branching and connecting point time determined by a user) time-V. The second input section 4 is used for inputting a permission range gap-range of a time difference gap. The time difference calculating section 2 calculates the time difference (a time obtained by subtracting a difference ext-A-time between a starting time of a video frame after branching and a starting time of an audio frame after branching from a difference between the user time time-V and the finishing time time-A of the audio frame, the finishing time time-A being the nearest to and is smaller than the user time time-V) gap based upon the taken digital compressed data and the designated user time time-V. The time difference calculating section 2 also calculates the time difference gap which is smaller than the permission range gap-range by decreasing the number num-V-AU of the video frames 1 by 1 based upon the permission range gap-range in addition to the taken digital compressed data and the designated user time time-V. The display section 5 visually displays the reproduction branching and connecting point based upon the taken digital compressed data. The synchronous editing section 6 performs synchronous editing of the digital compressed data comprising digital compressed video data and audio data based upon the time difference gap which is smaller than the permission range gap-range.

When this embodiment is employed, the function which is similar to that of the flowchart illustrated in Fig. 1 is performed. And, the pause time for audio data reproduction at the reproduction branching and connecting point can be determined to be within the permission range gap-range when the edited digital compressed data is reproduced.

In the above embodiments, it is described for a case that the time difference of the audio data is shorter than the permission range by employing the PTS data of the digital compressed video data as the standard data. It is possible that the time difference of the video data is shorter than the permission range by employing the PTS data of the digital compressed audio data as the standard data. When the latter arrangement is employed, the reproduction quality can be improved in cooperation with the afterimage phenomenon. Further, it is possible that the permission range is previously determined instead of designating the permission range by a user. Furthermore, it is possible that the permission range is not determined at all and that the user time is determined for minimizing the time difference.

### Possibility In Industrial Utilization

As is apparent from the foregoing, the method for adjusting and editing digital compressed video and audio frame gaps and the apparatus thereof according to the present invention can preferably be applied to an editing apparatus of digital compressed video data and audio data, because the method and apparatus calculate the editing connecting point time for minimizing the shifting between the reproduction time data at the first reproduction branching and connecting point in response to designating of the first reproduction branching and connecting point and determine the second reproduction branching and connecting point based upon the calculated editing connecting point time so that the pause time of video data reproduction and audio data reproduction can be minimized when a user designates the first reproduction branching and connecting point.

## Claims

1. A method for adjusting and editing digital compressed video and audio frame gaps which method edits to reproduce one digital compressed data halfway and to reproduce another digital compressed data thereafter, each digital compressed data having digital compressed video frames and digital compressed audio frames and being given reproduction time data for performing reproduction synchronism, the method comprising the steps of;
a calculating step for calculating an editing and connecting point time which is for minimizing shifting between reproduction time data at a first reproduction branching and connecting point in response to designation of the first reproduction branching and connecting point; and
a determining step for determining a second reproduction branching and connecting point based upon the calculated editing and connecting point, time.

2. A method for adjusting and editing digital compressed video and audio frame gaps as set forth in claim 1, further comprising the step of;
a displaying step for displaying frame data at the designated reproduction branching and connecting point and frame data at the determined reproduction branching and connecting point so that an edited point can be recognized.

3. An apparatus for adjusting and editing digital compressed video and audio frame gaps which apparatus edits to reproduce one digital compressed data halfway and to reproduce another digital compressed data thereafter, each digital compressed data having digital compressed video frames and digital compressed audio frames and being given reproduction time data for performing reproduction synchronism, the apparatus comprising;
an editing and connecting time calculating means (2) for calculating an editing and connecting time which is for minimizing shifting between reproduction time data at a first reproduction baranching and connecting point in response to designation of the first reproduction branching and connecting point; and
a synchronous editing means (2) (6) for determining a second reproduction branching and connecting point based upon the calculated editing and connecting point time, and for synchronously editing digital compressed video frames and digital compressed audio frames based upon the determined reproduction branching and connecting point.
